# EUROPEAN PATENT SPECIFICATION

(11) **EP 0 980 490 B1**
(45) Date of publication and mention of the grant of the patent: **12.12.2001**
(21) Application number: 98919346.1
(22) Date of filing: 29.04.1998
(51) Int. Cl.: F16L 58/10, F16L 55/165

(54) **METHOD OF LINING PIPES**
VERFAHREN ZUM INNENBESCHICHTEN VON ROHREN
PROCEDE PERMETTANT DE GARNIR DES TUYAUX

(30) Priority: 03.05.1997 GB 9709027; 02.12.1997 GB 9725432
(43) Date of publication of application: 23.02.2000
(73) Proprietor: Advanced Engineering Solutions Ltd., Cramlington, Northumberland NE23 9WF (GB); Burley, Colin, Newcastle upon Tyne NE3 2QX (GB)
(72) Inventor: BURLEY, Colin, Newcastle upon Tyne NE3 2QX (GB); WRIGHT, Nigel, Northumberland NE65 9JS (GB)
(74) Representative: Jones, Stephen Anthony
(86) International application number: GB9801255
(87) International publication number: WO9850725

(56) References cited:
- EP-A- 0 531 790
- WO-A-92/01189
- WO-A-92/15818
- GB-A- 2 264 765

## Description

This invention relates to a method of lining pipes, in particular to a method of installing plastics linings in lengthy pipelines.

For a number of years non-bonded liners (eg thermoplastics, elastomers etc) have been used in the chemical industry to protect steel pipelines from corrosion. Often these are applied to short lengths of flanged pipe and connected using insulated bolts.

Polyethylene (PE) pipe has been extensively used as a liner to refurbish buried low pressure gas and water distribution mains. In this application the liner is reduced in diameter via rolling or swaging prior to being pulled into the pipeline, thus ensuring lengths up to 1km can be lined in a single operation. The liner acts as a pipe within a pipe and is able to cope with the low gas and water pressures without any assistance from the original carrier pipe.

Recently, lining of pipes with PE has also been used in high pressure offshore pipelines. In this application the PE acts as a true unbonded liner and the carrier pipe resists the bursting forces from the internal pressure. At present the PE liners are only being used for high pressure water injection pipelines because of concerns over the stability of PE when working in a hot hydrocarbon environment.

PE pipe is an ideal liner for the refurbishment of old low pressure gas and water mains. A smaller diameter PE pipe is simply pulled into the main. However, if a significant reduction in flow capacity of the main cannot be tolerated, then a close fitting PE liner needs to be employed. This works well if the bore of the old main is clear of any protrusions, eg threaded service tee connections etc, but if protrusions are present the liner is required to stretch or bridge over the protrusions which causes stress concentrations in the PE, leading to slow crack growth and failure of the liner. Therefore at present all protrusions have to be removed when using close fit PE liners.

Liner technology has potentially an important role offshore in reducing the cost of gas pipelines. As the number of large oil and gas fields diminish there is a growing need to reduce the capital and operating cost of the newer smaller fields. This means that simple low cost unmanned platforms are being designed that do not have the facilities to clean and separate the oil, gas and water before transportation. Such design changes will require future pipelines to carry all the produced fluids from the wells such as aggressive hydrocarbons or wet acid gases. These fluids require expensive corrosion control if unprotected C-Mn steel pipes are used or alternatively expensive duplex stainless steel pipes would be required to transport the raw fluid to the onshore reception terminal for treatment. The ideal design of a low cost pipeline for transporting these fluids is to use a high performance liner inside a standard C-Mn steel pipe. At present, however, the use of PE liner is restricted to high pressure water injection pipelines because of the reduced performance of PE in a hydrocarbon environment and relatively low operating temperature. The operating temperature for PE pressure pipe is usually restricted to 60°C due to its reduction in strength. When used as a liner within a steel pipeline the maximum operating temperature may be raised to 80°C since the carrier pipe supports the liner. PE linings would melt at the desired operating temperatures of around 130°C and therefore cannot meet the future requirements of the offshore industry.

PE liners operating in hydrocarbon fluids are also susceptible to deterioration through solvation or environmental stress cracking or both. Solvation is the absorption of a liquid into the bulk of the material causing swelling and loss of strength. Methanol and glycol, which are used to condition the gas to prevent the formation of methane hydrate, may also cause environmental stress cracking in PE.

Stability of the liner within the carrier pipe is critical to the long term operation of the pipeline when subjected to wide fluctuations in temperature. With rising temperature the lining will expand and if the longitudinal movement is nor restrained, the liner could buckle and collapse. It is therefore essential to retain a "tight fit" between the liner and the pipe.

If gas is present in the pipeline, then there is the additional problem of slow pressure diffusion to the annular interface between the liner and the carrier pipe. Any sudden depressurisation of the pipeline would leave this annular area fully pressurised causing the liner to collapse.

There are numerous methods of temporarily reducing the liner's outside diameter so that it can be easily pulled into the carrier pipe before it recovers to the bore of the pipe.

A first process, know as "swagelining" uses PE pipe butt fused together to form a continuous liner which has an outside diameter slightly larger than the bore of the pipe. The liner is pulled through a reduction die before it enters the pipe thus temporarily reducing the diameter of the liner below that of the bore of the pipe. After the liner has been pulled into the carrier pipe and the tension removed from the winch wire, the liner tries to recover to its original diameter. The smaller bore of the pipe ensures the liner has the desired tight fit inside the pipe.

The disadvantages of this method of liner insertion are:
- Large loads are generated in the winch wire which requires constant monitoring to avoid overstressing the liner.
- If the winch stops or fails during the operation then there is a risk that the liner will recover inside the pipe before it is fully pulled home.
- The steel pipe weld beads have to be minimised to avoid excessive pull in loads.
- The pipe bore needs to be closely toleranced to ensure the tight fit and avoid large pull in loads.
- The large pull in forces restrict the lining distances to around 600m.
- Expensive specialist equipment is required.

A second process also starts with an oversize thermoplastic liner which is plastically deformed to give a reduction in diameter. After insertion the liner is hydraulically expanded in the carrier pipe but some relaxation is experienced when the hydraulic pressure is removed. This gives rise to a small gap at the liner pipe interface. As the liner is repressurised during service the liner will again be forced against the pipe wall but as the gas diffuses through the liner wall some relaxation of the pipe wall can be expected.

Disadvantages of this system are:
- Expensive bulky equipment is required.
- Poor liner fit leading to stability problems and greater rates of corrosion in the gap.

Crosslinked polymeric materials have also been proposed for use in lining pipes and have characteristics required for a high performance liner, eg high operating temperature, toughness and excellent chemical resistance. The principal problem in the use of these materials has been how to install the liner to ensure a tight fit into the carrier pipe.

One attempt at a solution to this problem is disclosed in British Patent Application GB 2264765A. This describes a method in which a cross-linked polyethylene liner is used, the liner having a diameter which has been reduced from its original diameter but which retains a memory of its original diameter. After installation in the pipeline, a heating device is passed through the liner and causes the liner to revert to its original diameter.

This approach too, however, is subject to numerous disadvantages. For example, problems are experienced in recovering the liner back to the bore of the carrier pipe. The heat required is in excess of 100°C so that special gas heaters are required to be pulled through the bore of the lining. Any delay in traversing the heaters through the bore could scorch the lining which in turn could induce premature failures. The maximum diameter of liner recovered may be too small for practical purposes. Furthermore, once the liner has recovered to the bore of the carrier pipe and the heat is removed, the liner then contracts and shrinks away from the pipe wall. This reduces the tightness of fit leading to liner stability problems and increased corrosion rates.

In addition, one length of cross-linked liner cannot be easily butt-welded to another length, as is commonly required to produce sufficiently lengthy linings. For the same reason, the cross-linked liner is difficult to repair. Also, the cross-linked material is relatively stiff, making coiling for economical transportation possible only for relatively small diameter liners.

There has now been devised an improved method of lining pipes which overcomes or substantially mitigates the above-mentioned disadvantages.

According to the invention, a method of lining a pipe comprises
a) providing a lining pipe of thermoplastics material, the lining pipe having been extruded with a diameter less than the internal diameter of the pipe to be lined, and the thermoplastics material incorporating a cross-linking agent that is activated by contact with water molecules,
b) inserting the lining pipe into the pipe that is to be lined,
c) causing the lining pipe to expand into contact with the pipe to be lined, and
d) introducing water molecules into the lining pipe, thereby causing the thermoplastics material to become cross-linked.

The method according to the invention is advantageous primarily in that the lining pipe is cross-linked only after it has been introduced into the existing pipe. The liner initially has a smaller diameter than the existing pipe and is therefore relatively easy to introduce, without the need for complex and expensive equipment. The act of cross-linking in situ causes the liner to set at the diameter of the existing pipe. The liner may also adhere or bond to the internal surface of the existing pipe, giving a considerable increase in stability and reducing corrosion at the annular interface. In addition, no large and costly equipment is required for reduction of the liner diameter prior to installation of the liner.

Since the liner behaves initially like a thermoplastic it can be coiled for transportation to site. Because the liner is extruded at a relatively small diameter, coils of liner suitable for lining an existing pipe of diameter up to 250mm or more may be possible.

Because the method produces a cross-linked lining it benefits from the advantages of such materials. These include high temperature stability, meaning for example that a liner operating temperature of around 130°C is feasible. The liner also exhibits a long operating life, even if subjected to elevated temperatures. The material is also relatively tough and does not suffer the slow crack growth and environmental stress cracking problems experienced by PE. Also the material can tolerate notches without crack propagation. The chemical resistance to aromatic and aliphatic hydrocarbons is also relatively good compared with PE.

The preferred material used for the lining pipe is a cross-linkable polyolefin, most preferably cross-linkable polyethylene.

One preferred form of cross-linkable polyethylene comprises a polyethylene or the like to which vinyl silane groups are grafted. A process for producing such materials is described in detail in British Patent No 1286460 ("the Silane Process"). Essentially the process involves reacting a polyolefin (eg polyethylene) with a silane containing at least one vinyl group and at least one hydrolysable organic radical.

Materials of the preferred kind can be cross-linked by exposure to moisture. Thus, following installation of the cross-linkable liner in the existing pipe, the liner can be expanded (eg by the application of pressure within the liner) and cross-linked by passing water down the liner, most preferably at elevated temperature. Indeed, the expansion of the liner and the cross-linking may be carried out simultaneously by feeding hot water under pressure through the bore of the lining. Additionally, the crosslinking could be carried out in pipelines carrying fluid other than water during normal operation by dosing the fluid product (eg oil) with water, or water vapour in the case of gaseous product. The level of dosing and the time for dosing would be dependent on the operation of the pipeline. The advantage of this would be to allow the lining operation to be carried out with minimal disruption to the working of the pipeline.

In the simplest method of expanding and cross-linking the liner, hot water under pressure is simply pumped down the liner. However, in view of the length of pipeline which may be involved in practice (commonly 1km or more), the handling, heating and disposal of the required volume of water may be a problem. In such circumstances, it is preferred for a smaller volume of water to be held between a pair of spaced apart barriers which are progressively traversed along the liner. The barriers are preferably seals provided on one or more pipe pigs. A single pig may have two such seals, the space between the seals forming a chamber for the hot water. Alternatively, two pigs may be moved in unison along the liner, the space between the pigs containing the hot water.

The speed of the pigs will be governed by the rate of the expansion and cross-linking process, which in turn is dependent on the temperature and/or pressure of the water. The water between the seals may be heated by an electric heating element carried between the seals. Alternatively, water or saturated steam may be heated externally of the pipeline and pumped to the space between the seals.

As the pig or pigs traverse the pipeline, the liner will expand in a radial direction until it meets the pipe wall, due to the heat and/or pressure of the water. It is therefore preferred that the rear seal also expands radially to follow the changing diameter of the liner. Air pressure may be applied to the rear of the pig to ensure the lining remains a tight fit onto the pipe wall as the lining cools and may also be used to progressively drive the pig. Alternatively a winch wire or armoured hose supplying water or steam or an electric cable can be used to pull the pig through the liner. If a balancing pressure is required at the front of the pig then the hoses or cables may be deployed through a stuffing box at the end of the liner.

As the liner is cross-linked by exposure to water, and where the liner is extruded prior to use, it will generally be necessary to wrap the liner to prevent premature cross-linking due to exposure to rain or atmospheric moisture.

The liner may be extruded from a conventional single screw extruder, thus opening the possibility of on-site extrusion in the yard of a pipe fabricator or next to a large insertion project. This would allow larger sizes which cannot be coiled to be produced as a continuous length, eliminating transport costs and numerous butt welds.

The method of the invention also facilitates the butt welding of sections of liner. Uncrosslinked lengths of liner can be welded together before insertion into the existing pipe. Alternatively, a second section of liner may be inserted into the existing pipe after a first section has been inserted and crosslinked. The diameter at the end of the second section can then be locally expanded and the two sections conventionally butt welded because the second section is still uncrosslinked. Once the butt welding has been completed the second section can then be crosslinked with pressurised hot water.

A variation on this procedure is to have both sections fully crosslinked but to use a bridging section of uncrosslinked liner to join the two sections together. After butt welding the bridging section can then be crosslinked to complete the liner. This technique lends itself to liner repair where the bridging section becomes the repair sleeve. Such a sleeve could be deployed externally by manual methods or internally as part of a piggable repair system. A pigging repair system could locate the damage, cut out the damaged section, deploy the new section and butt weld a new section into place. The new bridging section can then be crosslinked using heated water between two pig seals.

The invention will now be illustrated, by way of example only, with reference to the accompanying drawings, in which
Figure 1 shows schematically the extrusion of a pipe liner according to the invention;
Figure 2 shows schematically the insertion of the pipe liner of Figure 1 inserted into an existing steel pipe; and
Figure 3 illustrates expansion and cross-linking of the inserted pipe liner of Figure 2;
Figures 4 and 4a illustrate the use of a pipe pig to expand and cross-link a liner for a lengthy pipe;
Figures 5 and 5a illustrate the use of a modified pig system;
Figures 6 and 6a show another modified pig system; and
Figures 7 and 7a show yet another modified pig system.

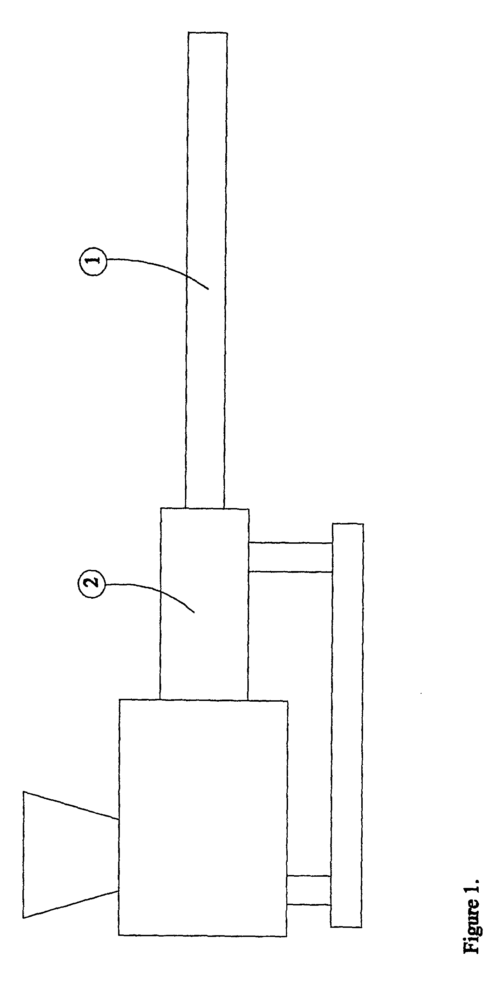

Referring first to Figure 1, a liner for installation in an existing pipeline, eg a ductile iron, cast iron or steel gas supply pipeline, is extruded as a pipe 1 of circular cross section from a conventional single screw extruder 2. The liner pipe 1 is of crosslinkable polyethylene produced by the Silane Process, ie by grafting of vinyl silane groups onto polyethylene. The liner pipe 1 has a diameter somewhat less than the diameter of the existing pipe into which it is to be inserted and is rolled into coils for storage and transportation. The coils of liner pipe are wrapped to prevent premature cross-linking of the material due to atmospheric moisture. Alternatively, the extruder 2 may be positioned at the installation site and the extruded liner pipe 1 fed directly into the existing pipe which is to be lined.

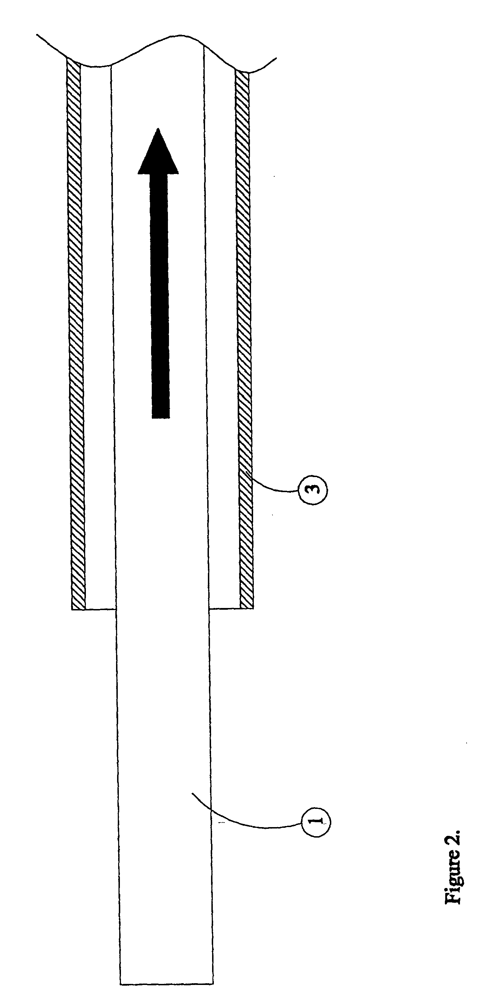

Figure 2 shows the liner pipe as it is inserted, along the direction of the arrow, into an existing steel gas supply pipeline 3. The smaller diameter of the liner pipe 1 enables it to be introduced into the steel pipe 3 relatively easily, without the need for expensive and complex equipment.

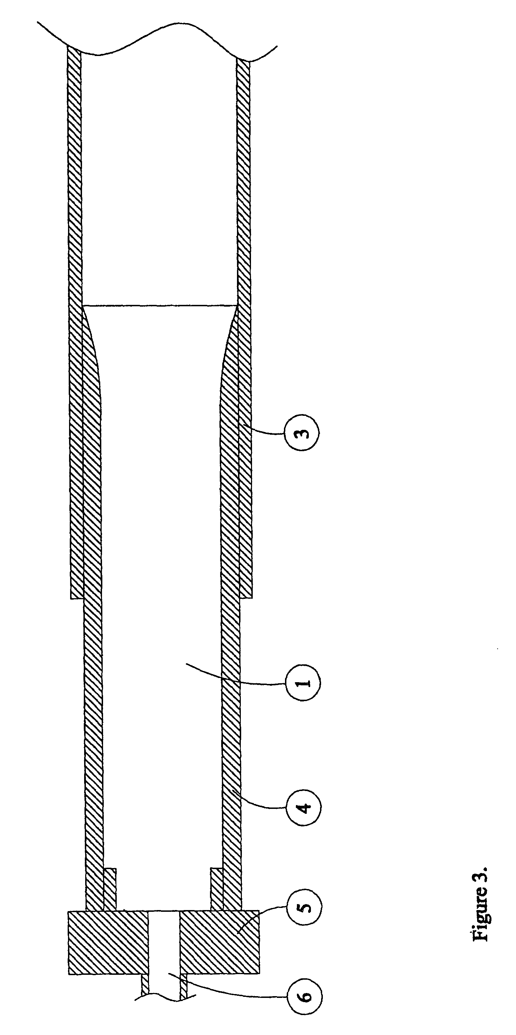

Once the liner pipe 1 is installed in the steel pipe 3, hot water (or steam) is fed under pressure along the inner bore of the liner pipe 1 causing the liner pipe 1 to expand into contact with the internal surface of the steel pipe 3 (see Figure 3). Simultaneously, the hot water initiates cross-linking of the liner pipe 1 to produce a fully cross-linked liner in intimate contact with the existing steel pipe 3.

Prior to initiation of the expansion and crosslinking process, a sleeve 4 is inserted into the open end of the steel pipe 3, in the space between the steel pipe 3 and the liner pipe 1. The sleeve 4 protects the liner pipe 1 as it expands radially, preventing damage caused by the sharp edges of the end of the steel pipe 3. The sleeve 4 also supports and protects the liner pipe 1 as it expands axially and protrudes from the steel pipe 3. The external end of the sleeve 4 is closed by an end fitting 5 with a central port 6 through which the hot water is injected.

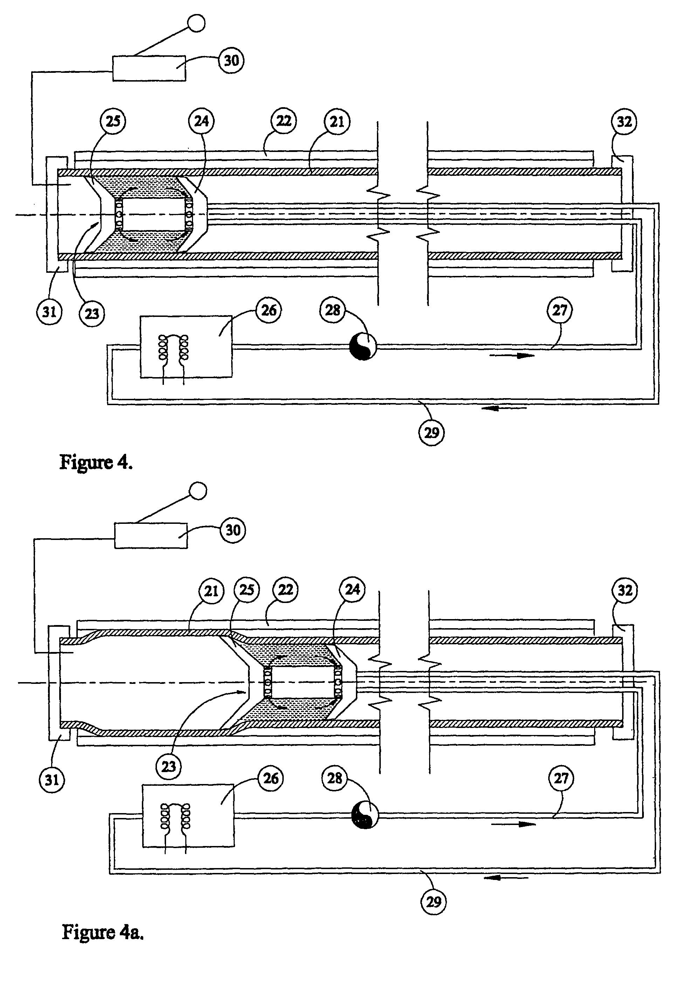

Referring now to Figures 4 and 4a, a liner 21 similar to that described above is inserted into a steel pipe 22. To expand and cross-link the liner 21, a pipe pig 23 is introduced to the liner 21. The pig 23 has forward and rear radial seals 24,25, the annular space between the seals 24,25 being supplied with hot water from a boiler 26 located externally of the pipeline. Water is fed to the pig 23 via a supply hose 27 with a pump 28, and is recirculated via a return hose 29.

As the pig 23 traverses the pipeline, the liner 21 expands in a radial direction until it meets the wall of the pipe 22, due to the heat and/or pressure of the water. The rear seal 25 on the pig 23 also expands radially to follow the changing diameter of the liner 21 (see Figure 4a). Air pressure is applied to the rear of the pig 23 by a pump 30 to ensure the lining remains a tight fit onto the pipe wall as the lining cools and also to drive the pig 23 along the liner 21. A seal 31 is fitted to the open end of the liner 21, compressed air being supplied from the pump 30 through the seal. Alternatively a winch wire or armoured hose could be used to pull the pig through the liner. A stuffing box 32 is provided at the end of the liner 21 in case a balancing pressure is required ahead of the pig 23, the supply hose 27 and return hose 29 passing through the stuffing box 32.

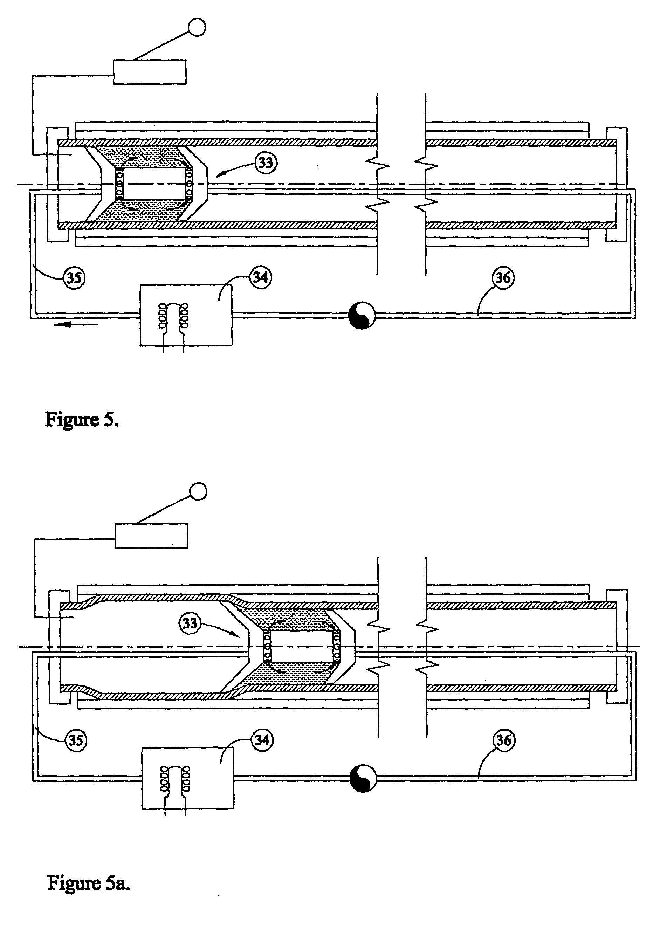

Figures 5 and 5a show a variation on Figures 4 and 4a, in which the water is fed from a boiler 34 via a supply hose 35 into the rear of the pig 33 and returned out of the front of the pig 33 via a return hose 36.

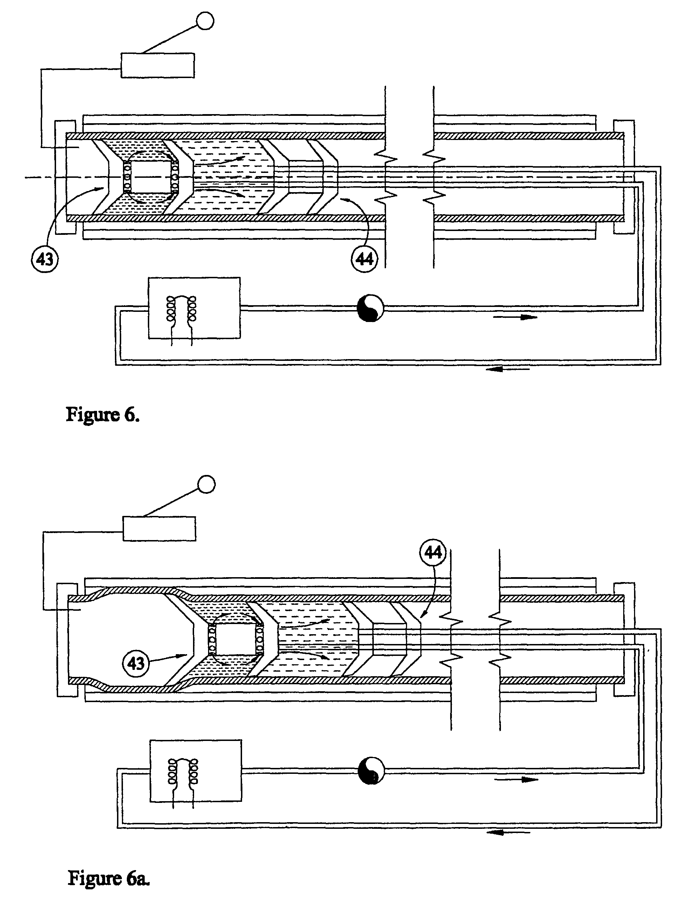

Figures 6 and 6a show a system utilising two pigs 43,44 with a greater volume of water contained between them. Water is fed into the rear pig 43 and is discharged from the front pig 44.

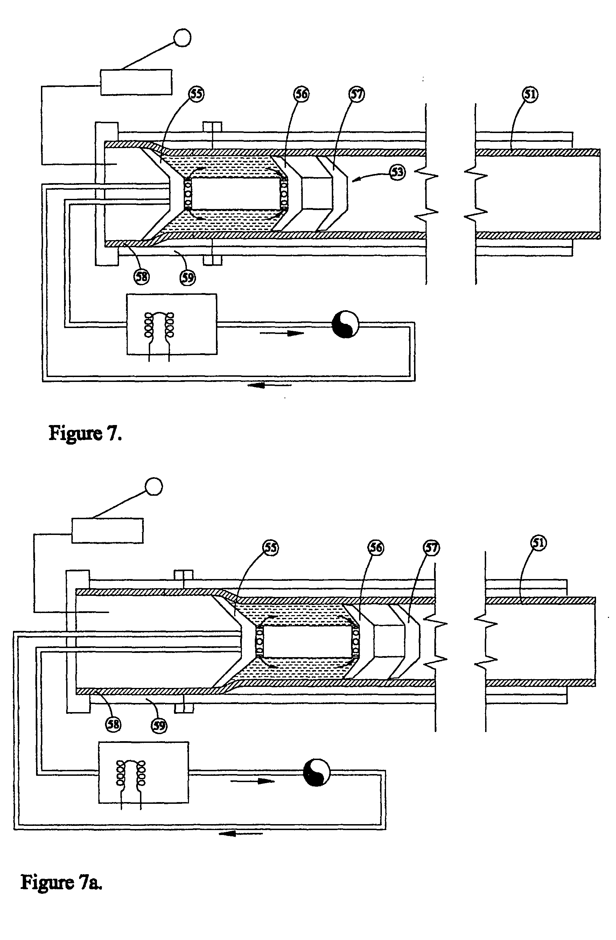

Figures 7 and 7a show a system utilising a design of pig 53 with a rear seal 55 and two front seals 56,57. The rear seal 55 is manufactured to the larger diameter matching the installed diameter of the liner 51, thus providing a firmer wiping action as it traverses down the liner 51. The front seals 56,57 are also of a fixed diameter corresponding to the original diameter of the liner 51. To facilitate entry of the larger rear seal 55 into the liner 51, the end of the liner 51 is butt welded to an expanded section 58 of PEX pipe which is supported by an adapter pipe 59. The PEX expanded section 58 and adapter pipe 59 are removed after the installation is completed.

## Claims

1. A method of lining a pipe comprising
a) providing a lining pipe of thermoplastics material, the lining pipe having been extruded with a diameter less than the internal diameter of the pipe to be lined, and the thermoplastics material incorporating a cross-linking agent that is activated by contact with water molecules,
b) inserting the lining pipe into the pipe that is to be lined,
c) causing the lining pipe to expand into contact with the pipe to be lined, and
d) introducing water molecules into the lining pipe, thereby causing the thermoplastics material to become cross-linked.

2. A method as claimed in claim 1, wherein the lining pipe is of a cross-linkable polyolefin.

3. A method as claimed in claim 1, wherein the lining pipe is of cross-linkable polyethylene.

4. A method as claimed in claim 3, wherein the cross-linkable polyethylene comprises a polyethylene or the like to which vinyl silane groups are grafted.

5. A method as claimed in any preceding claim, wherein the liner is expanded and cross-linked by passing water down the lining pipe.

6. A method as claimed in any one of claims 1 to 4, wherein the liner is expanded and cross-linked during normal operation of the pipe by passing a fluid product dosed with water down the lining pipe.

7. A method as claimed in claim 5 or claim 6, wherein the water is at elevated temperature.

8. A method as claimed in claim 5, wherein a volume of water is held between forward and rearward spaced apart barriers which are progressively traversed along the lining pipe.

9. A method as claimed in claim 8, wherein the barriers are seals provided on one or more pipe pigs.

10. A method as claimed in claim 9, wherein the volume of water is held between two seals provided on a single pig, the space between the seals forming a chamber for the water.

11. A method as claimed in claim 9, wherein two pigs are moved in unison along the lining pipe, the space between the pigs containing the water.

12. A method as claimed in claim 8, wherein the water between the barriers is heated by an electric heating element carried between the barriers.

13. A method as claimed in claim 8, wherein water or saturated steam is heated externally of the pipeline and pumped to the space between the barriers.

14. A method as claimed in any one of claims 8 to 13, wherein the rearward barrier expands radially to follow the changing diameter of the liner.

15. A method as claimed in claim 9, wherein air pressure is applied to the rear of the pig to ensure the lining pipe remains a tight fit onto the pipe wall as the lining pipe cools.

16. A method as claimed in claim 9, wherein a winch wire or armoured hose supplying water or steam or an electric cable is used to pull the pig through the lining pipe.

17. A method as claimed in any preceding claim, wherein uncrosslinked lengths of lining pipe are welded together before insertion into the pipe.

18. A method as claimed in any one of claims 1 to 16, wherein a second section of liner is inserted into the pipe after a first section has been inserted and crosslinked, the diameter at the end of the second section then being locally expanded and the two sections butt welded, and the second section then crosslinked.

## Patentansprüche

1. Verfahren zum Auskleiden eines Rohrs, das folgendes aufweist:
a) Liefern eines Auskleidungsrohrs aus thermoplastischem Werkstoff, wobei das Auskleidungsrohr mit einem Durchmesser extrudiert worden ist, der kleiner ist als der innere Durchmesser des Rohrs, das ausgekleidet werden soll, und der thermoplastische Werkstoff ein Vernetzungsmittel umfasst,
b) Einschieben des Auskleidungsrohrs in das Rohr, das ausgekleidet werden soll,
c) Verursachen, dass das Auskleidungsrohr sich in Kontakt mit dem auszukleidenden Rohr ausdehnt, und
d) Einführen von Wassermolekülen in das Auskleidungsrohr, dabei Verursachen, dass der thermoplastische Werkstoff vernetzt wird.

2. Verfahren nach Anspruch 1, in dem das Auskleidungsrohr aus einen vernetzbaren Polyolefin ist.

3. Verfahren nach Anspruch 1, in dem das Auskleidungsrohr aus einem vernetzbaren Polyethylen ist.

4. Verfahren nach Anspruch 3, in dem das vernetzbare Polyethylen ein Polyethylen oder dergleichen aufweist, an das Vinylsilangruppen anpolymerisiert sind.

5. Verfahren nach einem der vorhergehenden Ansprüche, in dem die Auskleidung ausgedehnt und vernetzt wird, indem Wasser das Auskleidungsrohr heruntergegeben wird.

6. Verfahren nach einem der Ansprüche 1 bis 4, in dem die Auskleidung während Normalbetriebs des Rohrs ausgedehnt und vernetzt wird, indem ein flüssiges Produkt, das mit Wasser dosiert ist, das Auskleidungsrohr heruntergegeben wird.

7. Verfahren nach Anspruch 5 oder Anspruch 6, in dem das Wasser auf einer erhöhten Temperatur ist.

8. Verfahren nach Anspruch 5, in dem ein Volumen von Wasser zwischen nach vorne und hinten beabstandeten Schranken gehalten wird, die fortschreitend entlang dem Auskleidungsrohr durchquert werden.

9. Verfahren nach Anspruch 8, in dem die Schranken Dichtungen sind, die auf einem oder mehreren Rohrmolchen versehen sind.

10. Verfahren nach Anspruch 9, in dem das Volumen von Wasser zwischen zwei Dichtungen gehalten wird, die auf einem einzigen Molch versehen sind, wobei der Raum zwischen den Dichtungen eine Kammer für das Wasser bildet.

11. Verfahren nach Anspruch 9, in dem zwei Molche in Einklang entlang das Auskleidungsrohr bewegt werden, wobei der Raum zwischen den Molchen das Wasser enthält.

12. Verfahren nach Anspruch 8, in dem das Wasser zwischen den Schranken von einem elektrischen Erwärmungselement erwärmt wird, das zwischen den Schranken getragen wird.

13. Verfahren nach Anspruch 8, in dem Wasser oder gesättigter Dampf außerhalb der Rohrleitung erwärmt wird und auf den Raum zwischen den Schranken gepumpt wird.

14. Verfahren nach einem der Ansprüche 8 bis 13, in dem die hintere Schranke sich radial ausdehnt, um dem sich ändernden Durchmesser der Auskleidung zu folgen.

15. Verfahren nach Anspruch 9, in dem Luftdruck auf das hintere Ende des Molchs angewandt wird, um sicherzustellen, dass das Auskleidungsrohr auf der Rohrwand eng angepasst bleibt, wenn das Auskleidungsrohr abkühlt.

16. Verfahren nach Anspruch 9, in dem ein Windendraht oder ein bewehrter Schlauch, der Wasser oder Dampf liefert, oder ein elektrisches Kabel benutzt wird, um den Molch durch das Auskleidungsrohr zu ziehen.

17. Verfahren nach einem vorhergehenden Anspruch, in dem nicht vernetzte Längen von Auskleidungsrohr vor dem Einschub in das Rohr zusammengeschweißt werden.

18. Verfahren nach einem der Ansprüche 1 bis 16, in dem ein zweiter Auskleidungsabschnitt in das Rohr eingeschoben wird, nachdem ein erster Abschnitt eingeschoben und vernetzt worden ist, der Durchmesser an dem Ende des zweiten Abschnitts dann örtlich ausgedehnt wird und die beiden Abschnitte stumpfgeschweißt werden, und der zweite Abschnitt dann vernetzt wird.

## Revendications

1. Procédé de garniture de tuyau comportant
a) l'apport d'un tuyau de garniture de matière thermoplastique, le tuyau de garniture étant venu d'extrusion de diamètre inférieur au diamètre intérieur du tuyau à garnir, et la matière thermoplastique incorporant un agent de réticulation qui est activé au contact avec les molécules d'eau,
b) l'insertion du tuyau de garniture dans le tuyau prévu pour la garniture,
c) l'expansion du tuyau de garniture provoquée en contact avec le tuyau à garnir, et
d) l'introduction de molécules d'eau dans le tuyau à garnir, provoquant ainsi la réticulation de la matière thermoplastique.

2. Le procédé tel que revendiqué à la revendication 1, suivant lequel la chemise de garniture est en polyoléfine réticulée.

3. Le procédé tel que revendiqué à la revendication 1, suivant lequel la chemise de garniture est en polyéthylène réticulé.

4. Le procédé tel que revendiqué à la revendication 3, suivant lequel le polyéthylène réticulé est un polyéthylène ou autre auqeul sont greffés des groupes de silane vinylique.

5. Le procédé tel que revendiqué à l'une ou l'autre des revendications precedents, suivant lequel la chemise de garniture est expansée et réticulée par l'introduction d'eau dans la chemise de garniture.

6. Le procédé tel que revendiqué à l'une ou l'autre des revendications 1 à 4, suivant lequel la chemise de garniture est expansée et réticulée lors du fonctionnement normal du tuyau en passant un produit liquide dosé d'eau dans le tuyau de garniture.

7. Le procédé tel que revendiqué à la revendication 5 ou à la revendication 6, suivant lequel l'eau est à température élevée.

8. Le procédé tel que revendiqué à la revendication 5, suivant lequel un volume d'eau est retenu entre des barrières espacées vers l'avant et vers l'arrière qui traversent progressivement le long de la chemise de garniture.

9. Le procédé tel que revendiqué à la revendication 8, dont les barrières sont des étanchéités prévues sur un ou plusieurs furets de tuyau.

10. Le procédé tel que revendiqué à la revendication 9, suivant lequel le volume d'eau est retenu entre deux étanchéités prévues sur un seul furet, le vide entre les étanchéités formant une chambre pour l'eau.

11. Le procédé tel que revendiqué à la revendication 9, suivant lequel deux furets sont déplacés ensemble le long de la chemise de garniture, le vide entre les furets contenant l'eau.

12. Le procédé tel que revendiqué à la revendication 8, suivant lequel l'eau entre les étanchéités est chauffée par un élément de chauffage électrique porté entre les barrières.

13. Le procédé tel que revendiqué à la revendication 8, suivant lequel l'eau ou la vapeur saturée est chauffée extérieurement par rapport au conduit principal puis pompée dans le vide entre les barrières.

14. Le procédé tel que revendiqué à l'une ou l'autre des revendication 8 à 13, suivant lequel la barrière vers l'arrière est l'objet d'une expansion radiale pour suivre la modification du diamètre de la chemise de garniture.

15. Le procédé tel que revendiqué à la revendication 9, suivant lequel une pression d'air est appliquée vers l'arrière du furet pour assurer le bon serrage de la chemise de garniture contre la paroi de tuyau au fur et à mesure du refroidissement de la chemise de garniture.

16. Le procédé tel que revendiqué à la revendication 9, suivant lequel un câble de treuil ou un tuyau armé apportant de l'eau ou de la vapeur ou un câble électrique sert à tirer le furet le long du tuyau de garniture.

17. Le procédé tel que revendiqué à l'une ou l'autre des revendications précédentes, suivant lequel les longueurs de chemise de garniture raccordées non-réticulées sont soudées ensemble avant l'insertion dans le tuyau.

18. Le procédé tel que revendiqué à l'une ou l'autre des revendications 1 à 16, suivant lequel une deuxième longueur de chemise de garniture est introduite dans le tuyau après une première longueur avoir assuré l'introduction et la réticulation, élu, le diamètre à l'extrémité de la deuxième longueur ayant été l'objet d'une expansion locale et les deux longueurs ayant été soudées à bossages, et la deuxième longueur étant alors réticulée.
